# EUROPÄISCHE PATENTSCHRIFT

(11) **EP 3 536 867 B1**
(45) Veröffentlichungstag und Bekanntmachung des Hinweises auf die Patenterteilung: **21.08.2024**
(21) Anmeldenummer: 19170566.4
(22) Anmeldetag: 28.03.2018
(51) Int. Cl.: E03F 5/02, B28B 7/36

(54) **VERFAHREN ZUR HERSTELLUNG EINES FORMTEILES**
METHOD FOR PRODUCING A MOULDED ARTICLE
PROCÉDÉ DE FABRICATION D'UNE PIÈCE MOULÉE

(30) Priorität: 31.03.2017 AT 502572017
(43) Veröffentlichungstag der Anmeldung: 11.09.2019
(62) Teilanmeldung aus: 18164805.6
(73) Patentinhaber: Predl GmbH, 04924 Bönitz (DE)
(72) Erfinder: PREDL, Manfred, 04924 Bönitz (DE)
(74) Vertreter: Beer & Partner Patentanwälte KG

(56) Entgegenhaltungen:
- WO-A1-2014/167135
- DE-A1- 1 584 657
- DE-A1- 102013 108 844
- DE-A1- 3 726 752
- DE-U1- 29 716 969

## Beschreibung

Die Erfindung betrifft ein Verfahren zur Herstellung einer Schachtbodenauskleidung, mit einem Grundkörper, der vorzugsweise eine Auftrittsfläche und wenigstens eine Rohranschlussöffnung aufweist, mit den folgenden Verfahrensschritten:
a) Erstellen einer Negativform der Schachtbodenauskleidung,
b) zumindest bereichsweises Umhüllen der Negativform mit einer flexiblen Folie, und
c) Erstellen des Grundkörpers durch Anformen eines Polymers in einem flüssigen oder pastösen Zustand an die mit der flexiblen Folie umhüllte Oberfläche der Negativform.

Begehbare Schächte älterer Bauart, die gemauert, betoniert oder aus Betonformstücken zusammengesetzt sind, weisen nach einer gewissen Zeit aufgrund von Umwelteinflüssen Zeichen von Korrosion bzw. Abnutzung auf. Insbesondere Zugangsschächte für Abwasserkanäle, an deren Böden Gerinne ausgeformt sind, die Verbindungen zwischen in die Schächte mündenden Abwasserrohren bilden, sind zusätzlich durch Abwässer, die aggressive Substanzen enthalten können, starken Belastungen unterworfen.

Durch Korrosion wird die Oberfläche des Materials, aus dem der Schacht gebaut ist, angegriffen. Um derart durch Korrosion beanspruchte Schächte wieder instand zu setzen, kommen unterschiedliche Sanierungsverfahren zum Einsatz. Neben Beschichtungen der vorhandenen Bausubstanz mit unterschiedlichen Materialien gehört die Sanierung durch Einsetzen vorgefertigter Bauteile in Schachtböden und in aufgehende, d.h. Wandbereiche bildende, Schachtbauteile zum Stand der Technik.

Um Sanierungsarbeiten am Schachtboden vor Ort möglichst effektiv ausführen zu können, wird eine vorgefertigte, an den zu sanierenden Schachtboden angepasste, Schachtbodenauskleidung aus Kunststoff in den Schacht eingeführt, am Grunde des Schachtes angeordnet, gegebenenfalls mit in den Schacht mündenden Rohren verbunden und mit Beton hinterfüllt. Bei Bedarf wird die Innenoberfläche der Wand des Schachtes ebenfalls mit einer vorgefertigten Schachtwandauskleidung ausgekleidet, die ggf. auch an der Wand fixiert und beispielsweise mit Beton hinterfüllt wird.

Da der Einstieg zum Schacht bei vielen Abwasserschächten eine deutlich kleinere lichte Weite aufweist als der Boden des Schachtes, auf dem die Schachtbodenauskleidung aus Kunststoff angeordnet wird, muss bei derzeit gängigen Sanierungsverfahren, welche mit vorgefertigten Sanierungsbauteilen arbeiten, entweder zuerst der obere Teil des Schachtes abgetragen oder die Schachtbodenauskleidung aus Kunststoff in Teilstücke zerteilt werden, welche im Schacht wieder miteinander verbunden werden. Da beide Methoden sehr zeit- und arbeitsaufwändig sind, wirkt sich dies auch negativ auf die Kosten und Zeitdauer der Sanierung aus. Darüber hinaus ist das Abtragen der oberen Schachtbauteile (Konus) nicht in jedem Fall möglich.

Aus DE 101 29 860 A1 ist eine Schachtbodenauskleidung bekannt, welche aus mittels Scharnieren miteinander verbundenen, klappbaren Teilen besteht. Diese Scharniere sind aber einerseits schwierig herzustellen und bilden andererseits Schwachstellen, sowohl was die mechanische Festigkeit als auch die Dichtheit der Schachtbodenauskleidung betrifft und erfordern eine Nacharbeit der Nahtstellen.

Verfahren zum Herstellen von Formteilen sind beispielsweise aus DE 10 2013 108 844 A1, DE 37 26 752 A1, DE 1 584 657 A1 und WO 2014/167135 A1 bekannt.

Bei bekannten Herstellungsverfahren für Schachtbodenauskleidungen aus Kunststoff für Sanierungen wird anhand der Schachtgeometrie des zu sanierenden Schachtes eine Negativform aus Kunststoff angefertigt, an die anschließend das Material, aus dem die Schachtbodenauskleidung hergestellt wird, angeformt wird.

Bei bekannten Verfahren zur Herstellung von Betonschachtunterteilen für den Neubau von Schächten werden entsprechend der benötigten Schachtgeometrie Negativformen aus geschäumtem Kunststoff gefräst oder herausgeschnitten, welche zur Ausformung der Gerinnegeometrie im Betonierprozess verwendet werden. Da die Oberfläche so einer Negativform aus geschäumtem Kunststoff sehr porös und rau ist, muss die Oberfläche vor dem Auftragen des Materials, aus dem die Schachtbodenauskleidung geformt wird, erst versiegelt bzw. beschichtet werden. Damit wird erreicht, dass sich die Negativform zerstörungsfrei aus dem fertigen Schachtunterteil entfernen lässt und dieser eine möglichst glatte Oberfläche aufweist. Nachteilig daran ist, dass das Versiegeln bzw. Beschichten der Negativform einen nicht unerheblichen Zeit- und Kostenaufwand mit sich bringt.

Der Erfindung liegt daher die Aufgabe zu Grunde ein Verfahren zur Herstellung einer Schachtbodenauskleidung für einen Abwasserkanalschacht zur Verfügung zu stellen, welches die Nachteile des Standes der Technik nicht aufweist. Dadurch soll das Herstellungsverfahren für eine Schachtbodenauskleidung vereinfacht und andererseits der Arbeitsaufwand bei einer Schachtsanierung verringert werden.

Gelöst wird diese Aufgabe erfindungsgemäß mit einem Verfahren zur Herstellung einer Schachtbodenauskleidung für einen Abwasserkanalschacht, das die Merkmale des Anspruches 1 oder 2 aufweist.

Bevorzugte und vorteilhafte Ausführungsformen der Erfindung sind Gegenstand der Unteransprüche.

Das erfindungsgemäße Verfahren zur Herstellung einer Schachtbodenauskleidung für einen Abwasserkanalschacht ist dadurch gekennzeichnet, dass die Folie aus einem hochelastisch verformbaren Kunststoff besteht, und dass während oder nach dem Verfahrensschritt c) wenigstens eine Haftbrücke mit dem Grundkörper verbunden wird.

In einem ersten Verfahrensschritt wird eine Negativform des herzustellenden Formteiles, insbesondere der Schachtbodenauskleidung, erstellt. Besonders bevorzugt ist es, wenn die Negativform wenigstens teilweise aus einem Kunststoff, insbesondere geschäumtem Kunststoff wie expandiertem Polystyrol, gefertigt, insbesondere aus einem Block eines solchen Materials herausgefräst oder geschnitten wird. Denkbar ist auch, dass wenigstens ein Teil der Negativform, der für mehrere verschiedene Ausführungsformen von Formteilen verwendet werden kann, aus anderen Materialien, wie beispielsweise Metall, insbesondere Aluminium, hergestellt wird.

Die Abmessungen der Negativform für eine Schachtbodenauskleidung richten sich nach dem Schacht, in dem die Schachtbodenauskleidung zum Einsatz kommt und können nach bekannten Maßen oder aufgrund von extra durchgeführten Vermessungen am Schacht ermittelt werden.

In einem folgenden Verfahrensschritt wird die Negativform zumindest bereichsweise mit einer dehnbaren und flexiblen Folie umhüllt. Eine solche Folie besteht aus einem hochelastisch verformbaren Kunststoff, beispielsweise aus Silikon, wobei der Begriff Folie nicht als Einschränkung hinsichtlich der Dicke verstanden werden soll. Die Folie kann, je nach Bedarf oder Material der Folie, unterschiedlich stark, beispielsweise zwischen 0,01 mm bis 5 mm, insbesondere zwischen 0,5 mm und 3 mm, ausgeführt sein. Durch das Umhüllen der Negativform mit der Folie ist die Oberfläche der Negativform geschützt bzw. versiegelt und ausreichend glatt für ein späteres Anformen des Formteiles, insbesondere der Schachtbodenauskleidung.

In einer besonders bevorzugten Durchführungsform des Verfahrensschrittes zum Umhüllen der Negativform wird die fertig erstellte Negativform in einer oben offenen Hüllvorrichtung platziert, die dichtend mit der Folie abgedeckt bzw. verschlossen wird. Anschließend wird die Luft in der Hüllvorrichtung, insbesondere in einem Bereich zwischen der Negativform und der Folie, evakuiert und die Folie durch den Unterdruck an die Negativform gesaugt bzw. durch den Umgebungsdruck an die Negativform angepresst.

In einer bevorzugten Weiterentwicklung dieser bevorzugten Durchführungsform des Verfahrens wird vor dem Erzeugen des Unterdruckes in dem Bereich zwischen der Negativform und der Folie ein Überdruck zwischen Negativform und Folie bzw. in der Hüllvorrichtung erzeugt. Dadurch wird die Folie elastisch verformt und wölbt sich von der Hüllvorrichtung und der darin platzierten Negativform weg. Die Negativform wird gleichzeitig oder anschließend an die gewölbte Folie angenähert und gegebenenfalls mit der Folie in Kontakt gebracht. Dies wird bevorzugt mit einem in der Hüllvorrichtung vorgesehenen Hubmechanismus durchgeführt, der die Negativform in Richtung zur Folie anhebt. Erst danach wird der Unterdruck zwischen der Folie und der Negativform erzeugt. Durch diese Weiterentwicklung lässt sich die Bildung von Falten, die an der Folie beim Umhüllen der Negativform entstehen könnten, weitestgehend verhindern.

Besonders vorteilhaft ist es, wenn im Anschluss an das zumindest bereichsweise Umhüllen der Negativform mit der Folie ein Gurt, ein Ring, eine Spannvorrichtung oder dergleichen umfangseitig um die Negativform, insbesondere um einen von der Folie umhüllten Sockelbereich der Negativform, gespannt wird. Damit wird die Folie so dicht an die Negativform angedrückt bzw. angepresst, dass der Unterdruck zwischen Folie und Negativform von selbst erhalten bleibt und kein Druckausgleich zwischen dem Bereich zwischen Folie und Negativform und der Umgebung stattfinden kann.

In einem weiteren Verfahrensschritt wird der Grundkörper des Formteiles, insbesondere der Schachtbodenauskleidung, erstellt. Dafür wird Material, das sich in einem flüssigen oder pastösen Zustand befindet, an die umhüllte Negativform angeformt, insbesondere aufgesprüht, angegossen, aufgetragen, anlaminiert, gespachtelt oder auf andere Weise aufgebracht. Das Anformen kann manuell und/oder automatisch unter Zuhilfenahme geeigneter Werkzeuge, wie beispielsweise einer Sprühpistole, durchgeführt werden. Das Anformen kann in einem einzigen Schritt oder in mehreren aufeinanderfolgenden Schritten, gegebenenfalls unter Kombination verschiedener, vorstehend erwähnter oder anderer Methoden erfolgen.

Erfindungsgemäß ist das zum Erstellen des Grundkörpers verwendete Material ein elastisch verformbares Polymer, insbesondere ein Duroplast oder Elastomer. Besonders bevorzugt ist die Verwendung von Polyharnstoff, wenn der Grundkörper einstückig mit einer Wandstärke gefertigt wird, womit er wenigstens in Teilbereichen im Wesentlichen beliebig zusammen gebogen werden kann.

Bei einer Schachtbodenauskleidung für die Sanierung eines Schachtes ist das Material, aus dem der Grundkörper besteht, in dem Zustand, in dem die Schachtbodenauskleidung in den zu sanierenden Schacht eingebracht wird, flexibel. Es ist im Rahmen der Erfindung möglich, dass das Material im Laufe der Zeit nach dem Einbringen in den Schacht noch weiter aushärtet und somit an Flexibilität verliert, was für die Erfindung allerdings nicht nachteilig ist. Wesentlich ist, dass das Material zu dem Zeitpunkt, zu dem die Schachtbodenauskleidung in den Schacht eingebracht wird, so flexibel ist, dass der Grundkörper zusammengebogen werden kann, um ihn einfacher durch die Einstiegsöffnung in den Schacht einbringen zu können.

Als flexibel wird im Rahmen der Erfindung verstanden, dass das Material bei einer gleichbleibenden Wandstärke oder bei unterschiedlichen Wandstärken, mit der/denen der Grundkörper gefertigt wird, elastisch verformbar und biegsam ist, insbesondere, dass das Material zerstörungsfrei weitreichend elastisch verformt und um Biegeradien, welche bevorzugt in der Größenordnung von mehr als 1 oder 2 cm, bevorzugt größer als 3 oder 4 cm liegen, elastisch gebogen werden kann.

Vorzugsweise wird während der Herstellung des Grundkörpers durch Anformen an die Negativform wenigstens ein Rohrstutzen und/oder wenigstens ein Übergangsstreifen (z.B. aus faserverstärktem Kunststoff, insbesondere aus glasfaserverstärktem, ungesättigten Polyesterharz, textilkaschiertem Thermoplast oder aus ähnlichen Materialien bzw. Materialkombinationen) an der Negativform angeordnet, insbesondere angelegt, aufgeschoben oder befestigt. Nachdem sich das Material des Grundkörpers zumindest teilweise verfestigt hat, ist der Rohrstutzen mit dem Grundkörper verbunden.

Alternativ können der Grundkörper und wenigstens ein Rohrstutzen auch durchgängig aus ein und demselben flexiblen Material hergestellt werden oder gar kein Rohrstutzen vorgesehen sein. Der/die Rohrstutzen und/oder Übergangsstreifen kann/können auch nach dem Herstellen des Grundkörpers an diesem angeordnet, insbesondere mit diesem verbunden, vorzugsweise verklebt, anlaminiert oder verschweißt, werden.

Weiters ist im Rahmen des erfindungsgemäßen Verfahrens vorgesehen, dass granulatförmige Haftbrücken und/oder eine oder mehrere Haftbrücken mit geometrisch definierter Form, beispielsweise in Leistenform, bereits bei der Herstellung des Grundkörpers mit dem Grundkörper verbunden werden.

In einem abschließenden Verfahrensschritt wird der Grundkörper von der Negativform entfernt, nachdem sich das Material des Grundkörpers ausreichend verfestigt hat. Ebenso denkbar ist es, dass, nachdem das den Grundkörper bildende Material wenigstens teilweise verfestigt ist, auf diesem Material, insbesondere auf der Seite des Grundkörpers, die von der Negativform abgewandt ist, weiteres aushärtendes Material, insbesondere Beton, aufgebracht wird. Der Grundkörper und das mit dem Grundkörper verbundene weitere Material werden von der Negativform entfernt, nachdem das weitere Material zumindest teilweise verfestigt bzw. ausgehärtet ist.

Ein Verfahren zum Auskleiden eines Schachtes, insbesondere zum Sanieren eines Abwasserkanalschachtes, kann auf beispielhafte Art und Weise wie folgt beschrieben werden:
Die Innenfläche des Schachtes, also der Boden, die Wand und die Einstiegsöffnung bzw. das Mannloch, kann vor dem Auskleiden bereichsweise oder großflächig gereinigt und von lockerem Material befreit und gegebenenfalls abgeschliffen oder abgefräst werden. In den Schacht mündende Rohre können bei Bedarf beispielsweise durch Absperrblasen verschlossen bzw. abgedichtet werden. Die Absperrblasen können gleichzeitig zur Fixierung der Rohrstutzen einer in den Schacht eingesetzten Schachtbodenauskleidung dienen.

In einem ersten Verfahrensschritt wird ein Formteil, insbesondere eine Schachtbodenauskleidung hergestellt, die einen Grundkörper aufweist, der flexibel ist und im Wesentlichen beliebig zusammengebogen werden kann.

Die Schachtbodenauskleidung weist wenigstens eine Rohranschlussöffnung und, wenn mehrere Rohranschlussöffnungen vorgesehen sind, vorzugsweise ein zwischen den Rohranschlussöffnungen verlaufendes Gerinne auf.

Die Abmessungen der Schachtbodenauskleidung richten sich nach dem Schacht, in dem die Schachtbodenauskleidung zum Einsatz kommt und können nach bekannten geometrischen Maßen (beispielsweise aus einer vorhandenen Datenbank) oder aufgrund von extra durchgeführten Vermessungen am Schacht ermittelt werden. Das Vermessen kann manuell oder automatisch, beispielsweise mit Hilfe eines 3D-Scanners, durchgeführt werden.

In einem weiteren Verfahrensschritt wird die Schachtbodenauskleidung zusammengebogen und durch die Einstiegsöffnung in den Schacht eingeführt. Im Schacht wird die Schachtbodenauskleidung wieder auseinandergebogen bzw. entfaltet sie sich durch ihre Elastizität weitgehend von alleine in ihre ursprüngliche Form und wird dann am Boden des Schachtes angeordnet.

In einem folgenden Verfahrensschritt wird die Schachtbodenauskleidung am Boden des Schachtes festgelegt bzw. fixiert und in einem weiteren Verfahrensschritt mit aushärtendem Füllmaterial, wie Beton, hinter- bzw. unterfüllt, sodass die Hohlräume zwischen der Schachtbodenauskleidung und dem Boden (und gegebenenfalls eines unteren Randbereiches) des Schachtes ausgefüllt werden.

Das Festlegen bzw. Fixieren der Schachtbodenauskleidung dient dazu, dass die flexible Schachtbodenauskleidung beim Hinterfüllen nicht vom Boden des Schachtes weggedrückt wird bzw. eine unerwünschte Form annimmt.

Besonders bevorzugt ist es beim Verfahren zum Auskleiden eines Schachtes, wenn eine Negativform, die zur Herstellung der Schachtbodenauskleidung verwendet oder nach der Herstellung der Schachtbodenauskleidung passend zur Form der Schachtbodenauskleidung hergestellt wurde, falls notwendig zerteilt, in den Schacht eingebracht und passend auf der Schachtbodenauskleidung angeordnet wird. Durch Beschweren dieser (bei Bedarf wieder zusammengesetzten) Negativform wird die Schachtbodenauskleidung beim Hinterfüllen in Position und in Form gehalten und kann weder nach oben gedrückt werden noch eine andere als die gewünschte Form annehmen.

In einer bevorzugten Durchführungsform des Verfahrens zum Auskleiden eines Schachtes wird in weiterer Folge eine Schachtwandauskleidung in den Schacht eingebracht. Diese ist vorzugsweise so groß ausgeführt, dass damit die Wand des Schachtes bis zu einer festgelegten Höhe, vorzugsweise über die gesamte Schachthöhe, im Wesentlichen entlang des gesamten Innenumfangs des Schachtes bedeckt werden kann.

Vorteilhaft ist es dabei, wenn die Schachtwandauskleidung mit einem unteren Bereich teilweise in einem lotrecht vom Grundkörper der Schachtbodenauskleidung abstehenden Anschlussrand aufgenommen wird, sodass sich der Anschlussrand und der untere Bereich der Schachtwandauskleidung zumindest abschnittsweise überlappen. Die Schachtbodenauskleidung und die Schachtwandauskleidung werden, insbesondere im Bereich des Anschlussrandes, vorzugsweise dicht miteinander verbunden, beispielsweise verschweißt, verklebt, aneinander laminiert oder durch Einsatz einer Reparaturmanschette miteinander verbunden.

In einer besonders vorteilhaften Durchführungsform des Verfahrens zum Auskleiden eines Schachtes wird die Schachtwandauskleidung mit einem Übergangsstreifen aus textilkaschiertem Thermoplast, der an einer Innenseite des Anschlussrandes angeordnet und mit dem Grundkörper verbunden ist, thermisch verbunden, insbesondere verschweißt.

Bevorzugt wird dann auch die Schachtwandauskleidung mit einem Füllmaterial, zum Beispiel Beton, hinterfüllt.

Irgendwann nach der Anordnung der Schachtbodenauskleidung am Boden des Schachtes können die Rohranschlussöffnungen bzw. Rohrstutzen der Schachtbodenauskleidung mit den Rohren, die in den Schacht münden bzw. von diesem weg führen, dicht verbunden, insbesondere verklebt, laminiert oder verschweißt, werden.

Als Füllmaterial zum Hinterfüllen der Schachtbodenauskleidung und/oder der Schachtwandauskleidung wird vorzugsweise ein aushärtendes, mineralisches Material, wie beispielsweise Beton, verwendet. Wenn an der Schachtbodenauskleidung und/oder an der Schachtwandauskleidung Haftbrücken angeordnet sind, werden diese beim Aushärten des Füllmateriales im Füllmaterial verankert.

Weitere Einzelheiten, Merkmale und Vorteile der Erfindung ergeben sich aus der nachstehenden Beschreibung bevorzugter und den Schutzbereich nicht einschränkender Ausführungsformen der Erfindung unter Bezugnahme auf die angeschlossenen Zeichnungen. Es zeigt:
- Fig. 1: eine isometrische Ansicht einer Ausführungsform einer Schachtbodenauskleidung,
- Fig. 2: eine isometrische Ansicht der zusammengebogenen Schachtbodenauskleidung von Fig. 1,
- Fig. 3: eine isometrische Ansicht einer weiteren Ausführungsform einer mit einer Schachtwandauskleidung verbundenen Schachtbodenauskleidung,
- Fig. 4: einen Schnitt entlang der Ebene IV durch die Schachtbodenauskleidung von Fig. 3,
- Fig. 5: eine Detailansicht eines Ausschnittes V aus Fig. 4,
- Fig. 6: eine weitere Detailansicht eines Ausschnittes VI aus Fig. 4,
- Fig. 7: eine weitere Detailansicht eines Ausschnittes VII aus Fig. 4, und
- Fig. 8: einen Schnitt durch eine Hüllvorrichtung, eine Negativform und eine flexible Folie zur Verwendung in einem erfindungsgemäßen Verfahren zur Herstellung eines Formteiles, insbesondere einer Schachtbodenauskleidung.

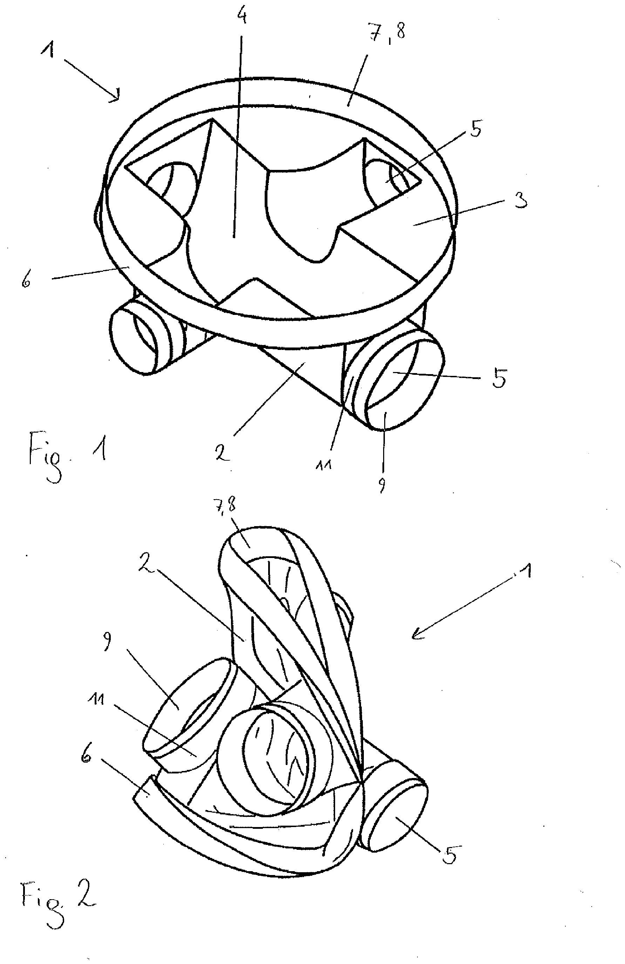

Fig. 1 zeigt eine Schachtbodenauskleidung 1 mit einem Grundkörper 2, die eine Auftrittsfläche 3 mit einem davon abgesenkten Gerinne 4 aufweist, wobei die Auftrittsfläche 3 in der in Fig. 1 dargestellten Ausführungsform im Wesentlichen kreisförmig ist, aber auch andere Formen (z. B. Polygone) denkbar sind. Das Gerinne 4 verbindet Rohranschlussöffnungen 5, die unterhalb der Auftrittsfläche 3 angeordnet sind.

Der Grundkörper 2 besteht aus einem flexiblen Material und ist in einer Wandstärke gefertigt, die es erlaubt, dass er wenigstens in den Bereichen, in welchen er nicht durch seine räumliche Form einen erhöhten Verformungswiderstand aufweist, im Wesentlichen beliebig, d.h. entlang beliebiger Konturen, zusammen gebogen werden kann.

Am Rand der Auftrittsfläche 3 ist ein Anschlussrand 6 angeordnet, der, vorzugsweise im Wesentlichen lotrecht, von der Auftrittsfläche 3 nach oben weg absteht und entlang einer Außenkontur der Auftrittsfläche 3 verläuft. Der Anschlussrand ist vorzugsweise aber nicht zwingend einstückig mit dem Grundkörper 2 hergestellt und weist eine Randinnenseite 7 auf, die im Wesentlichen zur Gänze von einem Übergangsstreifen 8 bedeckt ist.

In bzw. an jeder Rohranschlussöffnung 5 ist ein Rohrstutzen 9 angeordnet. Jeder Rohrstutzen 9 ist dabei teilweise in einem von der jeweiligen Rohranschlussöffnung 5 abstehenden, rohrförmigen Anschlussstück 11 aufgenommen und über dieses mit der Rohranschlussöffnung 5 und dem Grundkörper 2 dicht verbunden.

Das rohrförmige Anschlussstück 11 ist entweder bereits einstückig mit dem Grundkörper 2 und somit aus demselben Material wie dieser hergestellt worden oder ein aus einem textilbeschichteten, thermoplastischen Material oder ein aus einem glasfaserverstärktem Kunststoff hergestellter Übergangsstreifen 8, welcher sich fest und dicht sowohl mit dem Material des Grundkörpers als auch dem Material des Rohrstutzens verbinden lässt. Alternativ dazu kann das Anschlussstück 11 mit einem solchen Übergangsstreifen 8 verbunden sein, der vorzugsweise entlang einer Innenseite des Anschlussstückes 11 angeordnet, insbesondere damit verbunden, ist.

Fig. 2 zeigt die in Fig. 1 dargestellte Schachtbodenauskleidung 1 in zusammengebogener Form, wodurch die äußeren Abmessungen der Schachtbodenauskleidung 1 zumindest in eine Richtung erheblich verringert werden können. Somit kann die Schachtbodenauskleidung 1 in zusammengebogener Form durch eine Einstiegsöffnung, insbesondere ein Mannloch eines Schachtes, hindurchgeführt werden, die an ihrer breitesten Stelle schmäler als der Durchmesser der Auftrittsfläche 3 ist.

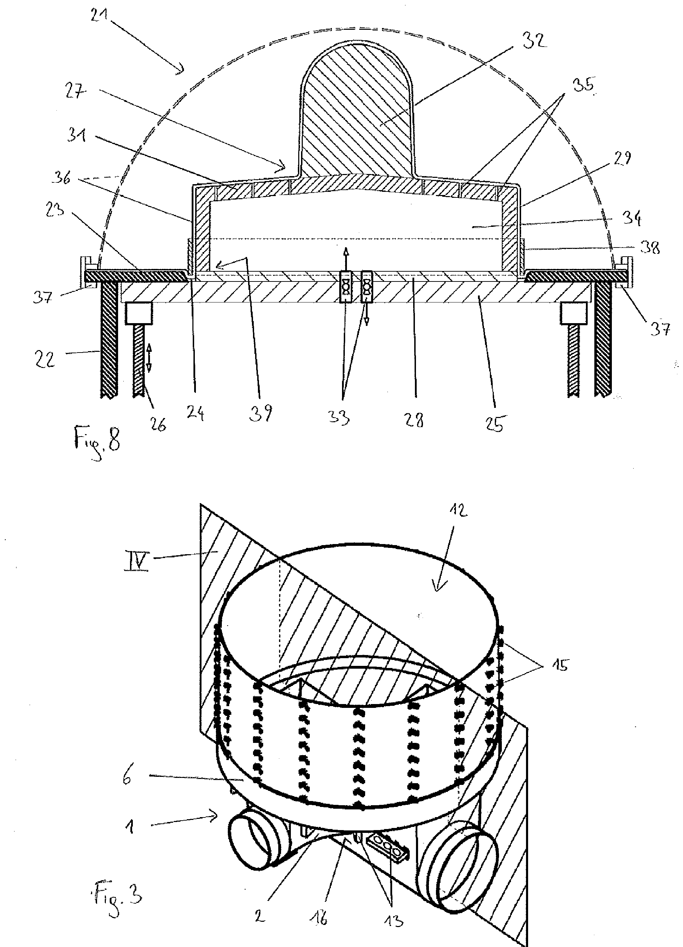

Fig. 3 zeigt eine isometrische Ansicht einer Schachtbodenauskleidung 1, die im Bereich des Anschlussrandes 6 mit einer Schachtwandauskleidung 12 verbunden ist.

Die in Fig. 3 dargestellte Schachtbodenauskleidung weist leistenförmige Haftbrücken 13 auf, die an geeigneten Stellen an der Unterseite des Grundkörpers 2 angeordnet sind. Des Weiteren sind an einer nach außen weisenden Oberfläche 16 des Grundkörpers 2, insbesondere im Bereich der Unterseite bzw. vorzugsweise in allen Bereichen des Grundkörpers 2, welche mit Füllmaterial hinterfüllt werden, granulatförmige Haftbrücken 14 angebracht. Die Schachtwandauskleidung 12 weist in der dargestellten Ausführungsform im Bereich der Außenseite angeordnete, weitere Haftbrücken 15 auf. Die Haftbrücken 13, 14 und 15 dienen der späteren Verankerung der Schachtbodenauskleidung 1 bzw. der Schachtwandauskleidung 12 im hinterfüllten Material.

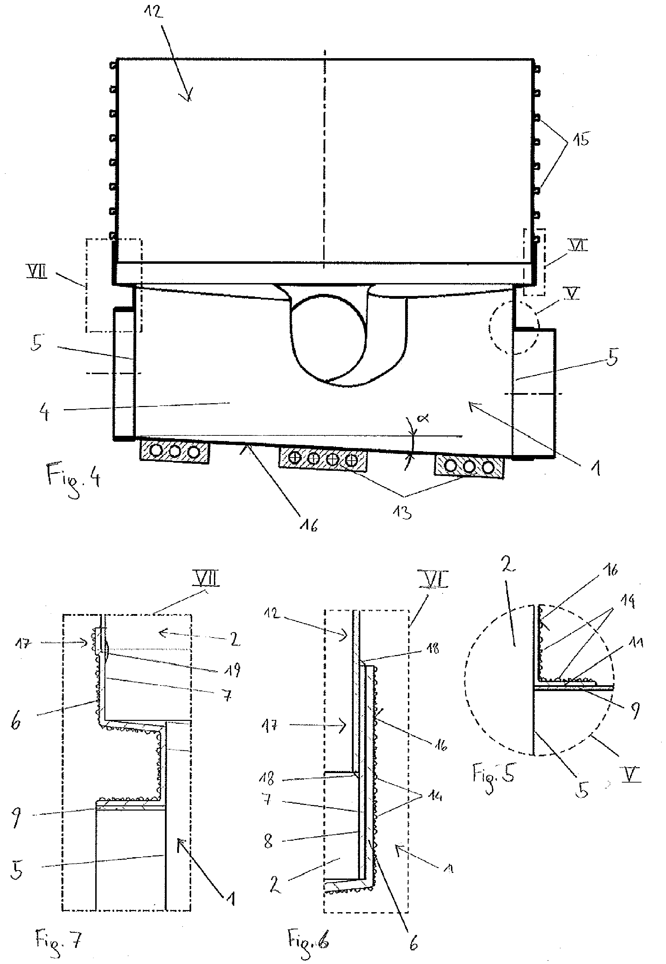

Fig. 4 zeigt einen Schnitt entlang der Ebene IV durch die in Fig. 3 dargestellte Schachtbodenauskleidung 1 und die damit verbundene Schachtwandauskleidung 12. Das Gerinne 4 zwischen den in der Schnittebene IV liegenden Rohranschlussöffnungen 5 weist ein Gefälle mit einem Gefällewinkel α auf, wobei andere Bereiche des Gerinnes 4 entweder kein Gefälle oder ein Gefälle mit einem gleichen oder anderen Gefällewinkel α aufweisen können.

Fig. 5 zeigt ein vergrößertes Detail V aus Fig. 4 im Bereich der Rohranschlussöffnung 5.

Das vom Grundkörper 2 abstehende, rohrförmige Anschlussstück 11 der Rohranschlussöffnung 5 umschließt den Rohrstutzen 9 und ist mit diesem über den gesamten Außenumfang des Rohrstutzens 9 dicht verbunden.

Das in Fig. 6 vergrößert dargestellte Detail VI aus Fig. 4 ist im Bereich des Anschlussrandes 6 angeordnet.

An der Randinnenfläche 7 des Anschlussrandes 6 ist ein Übergangsstreifen 8 angeordnet, der die Randinnenfläche 7 des Anschlussrandes 6 im Wesentlichen zur Gänze bedeckt.

Der Übergangsstreifen 8 besteht aus einem thermoplastischen Material mit wenigstens einer textilbeschichteten Seite, wird während der Herstellung des Grundkörpers 2 an diesen angeformt und ist über die an der Randinnenfläche 7 anliegende, textilbeschichtete Seite fest und dicht mit dem Anschlussrand 6 verbunden.

Die Schachtwandauskleidung 12 ist zumindest abschnittsweise im Anschlussrand 6 bzw. Übergangsstreifen 8 der Schachtbodenauskleidung 1 aufgenommen, sodass zwischen der Schachtwandauskleidung 12 und dem mit dem Anschlussrand 6 verbundenen Übergangsstreifen 8 ein Überlappungsbereich 17 gebildet ist.

Die Schachtwandauskleidung 12, die in der in Fig. 6 dargestellten Ausführungsform aus einem thermoplastischen Material besteht, ist mit dem ebenfalls aus einem thermoplastischen Material bestehenden Übergangsstreifen 8 verbunden, insbesondere am Rand der Schachtwandauskleidung 12 mittels einer Schweißnaht 18 mit dem Übergangsstreifen 8 verschweißt.

Das in Fig. 7 vergrößert dargestellte Detail VII aus Fig. 4 ist im Bereich des Anschlussrandes 6 und der Rohranschlussöffnung 5 angeordnet.

In der in Fig. 7 dargestellten Ausführungsform ist der Rohrstutzen 9 im Wesentlichen ganz in der zugeordneten Rohranschlussöffnung 5 aufgenommen und mit der Rohranschlussöffnung 5 und dem Grundkörper 2 dicht verbunden.

Die Schachtwandauskleidung 12 ist im Anschlussrand 6 der Schachtbodenauskleidung 1 aufgenommen und steht an einer im Anschlussrand verlaufenden Stufe 19 an, wobei der Überlappungsbereich 17 zwischen Anschlussrand 6 und Schachtwandauskleidung 12 eine Art Muffe bildet. Eine Innenseite der Schachtwandauskleidung 12 schließt im Wesentlichen stufenfrei bzw. bündig an die Randinnenseite 7 unterhalb des Überlappungsbereiches 17 an.

Die Schachtwandauskleidung 12, die in der in Fig. 7 dargestellten Ausführungsform aus einem duroplastischen Material besteht, ist mit dem ebenfalls aus einem duroplastischen Material bestehenden Anschlussrand 6 verbunden, insbesondere indem die Schachtwandauskleidung 12 mit dem Anschlussrand 6 im Überlappungsbereich verklebt ist oder indem ein Streifen über den Stoß zwischen der Stufe 19 und Schachtwandauskleidung 12 laminiert wird.

Fig. 8 zeigt eine bevorzugte Ausführungsform einer Hüllvorrichtung 21 zum Durchführen des erfindungsgemäßen Verfahrens zum Herstellen eines Formteiles, insbesondere einer Schachtbodenauskleidung 1.

Die Hüllvorrichtung 21 weist einen hohlzylinderförmigen Außenkörper 22 auf, der nach oben hin durch eine Platte 23 mit einer zentralen Öffnung 24 begrenzt ist und nach unten hin vorzugsweise verschlossen ist.

Im Außenkörper 22 ist ein Auflagetisch 25 parallel zur Platte 23 angeordnet, der mittels eines Hebemechanismus 26 zwischen einer abgesenkten Position, in der er von der Platte 23 beabstandet ist, und der dargestellten, angehobenen Position, in der er von unten her, insbesondere dichtend, an der Platte 23 anliegt, verstellbar ist.

Die Negativform 27 der Schachtbodenauskleidung 1 wird auf dem Auflagetisch 25 angeordnet, wobei sich der Auflagetisch 25 in der abgesenkten Position befindet.

Die Negativform 27 bildet die Form der fertigen Schachtbodenauskleidung 1 nach und umfasst weiters einen hohlzylinderförmigen Grundkörper 29 der Negativform 27, der er auf einer am Auflagetisch 25 liegenden Grundplatte 28 angeordnet ist.

Der Grundkörper 29 der Negativform 27 ist an einem der Grundplatte 28 gegenüberliegenden Ende durch eine Deckplatte 31, welche in der dargestellten Ausführungsform die Form einer von der Grundplatte 28 weg gerichteten stumpfen Kegelspitze aufweist, verschlossen. Ein von der Deckplatte 31 nach oben abstehender Gerinneformkörper 32 weist die Innenform des Gerinnes 4 des Formteils, insbesondere der Schachtbodenauskleidung 1, auf.

Die Grundplatte 28 verschließt den Grundkörper 29 der Negativform 27 von unten und weist einen Durchmesser auf, der kleiner als der Durchmesser der Öffnung 24 ist. Am Auflagetisch 25 und an der Grundplatte 28 angeordnete bzw. den Auflagetisch 25 und die Grundplatte 28 durchdringende Ventile 33 verbinden nicht dargestellte Leitungen für Fluid, insbesondere für Luft, mit einem im Grundkörper 29 gebildeten Hohlraum 34.

In der Deckplatte 31 angeordnete Durchgangslöcher 35 bilden für das Fluid eine Verbindung zwischen dem Hohlraum 34 und dem Raum über der Deckplatte 31.

Nach dem Anordnen der Negativform 27 auf dem Auflagetisch 25 wird oben auf der Platte 23 eine flexible Folie 36 angeordnet, sodass die Öffnung 24 von der Folie 36 überdeckt wird.

Die flexible Folie 36 wird dicht an die Platte 23 angepresst, was insbesondere entlang eines Außenrandes der Platte 23 und vorzugsweise mit einer dort angeordneten Klemmvorrichtung 37 erfolgt.

In einem weiteren Verfahrensschritt wird durch eines der Ventile 33 Fluid, insbesondere Luft, in den Hohlraum 34 eingeblasen, sodass zwischen der Negativform 27 und der flexiblen Folie 36 ein Überdruck gebildet und die flexible Folie 36, wie in Fig. 8 in strichlierter Form dargestellt, aufgebläht wird. Die flexible Folie 36 steht dadurch kuppelförmig von der Platte 23 nach oben ab. Anschließend oder gleichzeitig wird der Auflagetisch 25 in jene angehobene Position verstellt, die in Fig. 8 dargestellt ist. Theoretisch könnte die Negativform 27 im Rahmen der Erfindung auch ohne die vorherige Aufblähung der Folie 36 nach oben gehoben und dadurch die Folie 36 gespannt werden. Dies ist aber weniger vorteilhaft, weil dadurch die Folie 36 mechanisch höher beansprucht wird.

In dieser angehobenen Position des Auflagetisches 25 wird das Fluid durch das andere Ventil 33 abgesaugt, wodurch zwischen Negativform 27 und flexibler Folie 36 ein Unterdruck gebildet und die flexible Folie 36 durch den Umgebungsdruck an die Negativform 27 angepresst wird. Die flexible Folie 36 liegt aufgrund der vorherigen Vorspannung faltenfrei an der Negativform 27 an und umhüllt diese.

Im folgenden Verfahrensschritt wird um die Folie 36 ein Gurt 38 im Bereich der Platte 23 angeordnet, insbesondere herumgespannt. Der Gurt 38 überdeckt dabei vorzugsweise auch einen Sockelbereich 39 des Grundkörpers 29 der Negativform 27 und liegt an diesem an, wobei die Folie 36 außen an den Sockelbereich 39 und die Grundplatte 28 angepresst und eine dichte Verbindung zwischen Grundplatte 28 und Grundkörper 29 der Negativform 27 gebildet wird.

Nach dem Sperren der Ventile 33 und Lösen der Klemmvorrichtung 37 kann die Negativform 27 aus der Hüllvorrichtung 21 vom Auflagetisch 25 entfernt werden, ohne dass der Unterdruck innerhalb der Negativform 27 verloren geht.

Im folgenden Verfahrensschritt kann auf die mit der flexiblen Folie 36 umhüllte Negativform 27 Material angeformt werden.

Die Negativform 27 oder einzelne oder mehrere Teile der Negativform 27 lassen sich zu einem späteren Zeitpunkt aus dem daran angeformten Formteil lösen und können so zur Herstellung weiterer Formteile verwendet werden. Ebenso ist es möglich, den Gurt 38 und die flexible Folie 36 zur Herstellung weiterer Formteile zu nutzen.

| | | | |
|---|---|---|---|
| Bezugszeichenliste | | 30 | --- |
| 1 | Schachtbodenauskleidung | | |
| 2 | Grundkörper | 31 | Deckplatte |
| 3 | Auftrittsfläche | 32 | Gerinneformkörper |
| 4 | Gerinne | 33 | Ventile |
| 5 | Rohranschlussöffnung | 34 | Hohlraum |
| 6 | Anschlussrand | 35 | Durchgangslöcher |
| 7 | Randinnenseite | 36 | flexible Folie |
| 8 | Übergangsstreifen | 37 | Klemmvorrichtung |
| 9 | Rohrstutzen | 38 | Gurt |
| 10 | --- | 39 | Sockelbereich |
| 11 | Anschlussstück | | |
| 12 | Schachtwandauskleidung | | |
| 13 | Haftbrücke mit geometrisch definierter Form | α | Gefällewinkel |
| | | IV | Schnittebene |
| | | V | Detail |
| 14 | granulatförmige Haftbrücken | VI | Detail |
| | | VII | Detail |
| 15 | weitere Haftbrücken | | |
| 16 | Oberfläche | | |
| 17 | Überlappungsbereich | | |
| 18 | Schweißnaht | | |
| 19 | Stufe | | |
| 20 | --- | | |
| 21 | Hüllvorrichtung | | |
| 22 | Außenkörper | | |
| 23 | Platte | | |
| 24 | Öffnung | | |
| 25 | Auflagetisch | | |
| 26 | Hebemechanismus | | |
| 27 | Negativform | | |
| 28 | Grundplatte | | |
| 29 | Grundkörper der Negativform | | |

## Patentansprüche

1. Verfahren zum Herstellen einer Schachtbodenauskleidung (1) für einen Abwasserkanalschacht, mit einem Grundkörper (2), der vorzugsweise eine Auftrittsfläche (3) und wenigstens eine Rohranschlussöffnung (5) aufweist, mit den folgenden Verfahrensschritten:
a) Erstellen einer Negativform (27) der Schachtbodenauskleidung (1),
b) zumindest bereichsweises Umhüllen der Negativform (27) mit einer flexiblen Folie (36), und
c) Erstellen des Grundkörpers (2) durch Anformen eines Polymers in einem flüssigen oder pastösen Zustand an die mit der flexiblen Folie (36) umhüllte Oberfläche der Negativform (27),
**dadurch gekennzeichnet, dass** die Folie aus einem hochelastisch verformbaren Kunststoff besteht, und dass während des Verfahrensschrittes c) wenigstens eine Haftbrücke mit dem Grundkörper (2) verbunden wird.

2. Verfahren zum Herstellen einer Schachtbodenauskleidung (1) für einen Abwasserkanalschacht, mit einem Grundkörper (2), der vorzugsweise eine Auftrittsfläche (3) und wenigstens eine Rohranschlussöffnung (5) aufweist, mit den folgenden Verfahrensschritten:
a) Erstellen einer Negativform (27) der Schachtbodenauskleidung (1),
b) zumindest bereichsweises Umhüllen der Negativform (27) mit einer flexiblen Folie (36), und
c) Erstellen des Grundkörpers (2) durch Anformen eines Polymers in einem flüssigen oder pastösen Zustand an die mit der flexiblen Folie (36) umhüllte Oberfläche der Negativform (27),
**dadurch gekennzeichnet, dass** die Folie aus einem hochelastisch verformbaren Kunststoff besteht, und dass nach dem Verfahrensschritt c) wenigstens eine Haftbrücke mit dem Grundkörper (2) verbunden wird.

3. Verfahren nach Anspruch 1 oder 2, **dadurch gekennzeichnet, dass** die Folie aus Silikon besteht.

4. Verfahren nach einem der Ansprüche 1 bis 3, **dadurch gekennzeichnet, dass** das Polymer, das angeformt wird, aufgesprüht, angegossen, aufgetragen, anlaminiert oder gespachtelt wird.

5. Verfahren nach Anspruch 1, **dadurch gekennzeichnet, dass** nach Verfahrensschritt c), nachdem das den Grundkörper (2) bildende Material wenigstens teilweise verfestigt ist, weiteres aushärtendes Material auf das den Grundkörper (2) bildende Material aufgebracht wird.

6. Verfahren nach einem der Ansprüche 1 bis 5, **dadurch gekennzeichnet, dass** Verfahrensschritt b) in folgende Verfahrensschritte unterteilt ist:
b1) Platzieren der Negativform (27) in einer nach oben offenen Hüllvorrichtung (21),
b2) Abdecken der Hüllvorrichtung (21) mit der flexiblen Folie (36), und
b3) Erzeugen eines Unterdruckes in einem Bereich zwischen der flexiblen Folie (36) und der Negativform (27), wodurch sich die flexible Folie (36) an die Negativform (27) anlegt und diese umhüllt.

7. Verfahren nach Anspruch 6, **dadurch gekennzeichnet, dass** nach Verfahrensschritt b3) ein Gurt (38) oder dergleichen dicht um die flexible Folie (36) und um die Negativform (27) gespannt wird.

8. Verfahren nach Anspruch 6 oder 7, **dadurch gekennzeichnet, dass** nach Verfahrensschritt b2) ein Überdruck im Bereich zwischen der flexiblen Folie (36) und der Negativform (27) erzeugt wird, sodass sich die flexible Folie (36) von der Negativform (27) weg wölbt, und dass anschließend die Negativform (27) an die flexible Folie (36) angenähert, insbesondere mit der flexiblen Folie (36) in Kontakt gebracht, wird.

9. Verfahren nach einem der Ansprüche 1 bis 8, **dadurch gekennzeichnet, dass** die wenigstens eine Haftbrücke eine granulatförmige Haftbrücke ist.

10. Verfahren nach einem der Ansprüche 1 bis 9, **dadurch gekennzeichnet, dass** die wenigstens eine Haftbrücke eine Haftbrücke (13) mit einer geometrisch definierten Form ist.

11. Verfahren nach einem der Ansprüche 1 bis 10, **dadurch gekennzeichnet, dass** der Grundkörper (2) der Schachtbodenauskleidung (1) einstückig aus einem flexibel und elastisch verformbaren Material mit einer Wandstärke gefertigt wird, womit er wenigstens in Teilbereichen im Wesentlichen beliebig elastisch zusammen gebogen werden kann.

12. Verfahren nach Anspruch 11, **dadurch gekennzeichnet, dass** an der Auftrittsfläche (3) ein von der Auftrittsfläche (3) abgesenktes Gerinne (4), an das wenigstens eine Rohranschlussöffnung (5) anschließt, hergestellt wird.

13. Verfahren nach Anspruch 11 oder 12, **dadurch gekennzeichnet, dass** an die Auftrittsfläche (3) ein im Wesentlichen lotrecht abstehender, an eine Außenform der Auftrittsfläche (3) angepasster Anschlussrand (6) angeordnet wird.

14. Verfahren nach Anspruch 13, **dadurch gekennzeichnet, dass** entlang einer Randinnenseite (7) des Anschlussrandes (6) ein Übergangsstreifen (8) angeordnet wird.

15. Verfahren nach einem der Ansprüche 10 bis 14, **dadurch gekennzeichnet, dass** in der Rohranschlussöffnung (5) oder in einem an der Rohranschlussöffnung (5) ausgeformten, rohrförmigen Anschlussstück (11) ein Rohrstutzen (9) angeordnet und mit einem in der Rohranschlussöffnung (5) oder in dem Anschlussstück (11) angeordneten, textilbeschichteten, thermoplastischen Übergangsstreifen (8) verbunden wird.

## Claims

1. Method for producing a manhole base liner (1) for a wastewater manhole, having a base body (2) which preferably has a tread surface (3) and at least one pipe connection opening (5), having the following method steps:
a) creating a negative form (27) of the manhole base liner (1),
b) wrapping the negative form (27) with a flexible film (36) at least in certain areas, and
c) creating the base body (2) by molding a polymer in a liquid or pasty state onto the surface of the negative form (27) covered with the flexible film (36),
**characterized in that** the film consists of a highly elastically deformable plastic, and **in that** at least one bonding bridge is bonded to the base body (2) during process step c).

2. Method for producing a manhole base liner (1) for a sewer manhole, with a base body (2), which preferably has a tread surface (3) and at least one pipe connection opening (5), with the following method steps:
a) creating a negative form (27) of the manhole base liner (1),
b) wrapping the negative form (27) with a flexible film (36) at least in certain areas, and
c) creating the base body (2) by molding a polymer in a liquid or pasty state onto the surface of the negative form (27) covered with the flexible film (36),
**characterized in that** the film consists of a highly elastically deformable plastic, and **in that** at least one bonding bridge is bonded to the base body (2) after process step c).

3. Method according to claim 1 or 2, **characterized in that** the film consists of silicone.

4. Method according to one of claims 1 to 3, **characterized in that** the polymer which is molded on is sprayed on, cast on, applied, laminated on or filled.

5. Method according to claim 1, **characterized in that** after process step c), after the material forming the base body (2) has at least partially solidified, further hardening material is applied to the material forming the base body (2) .

6. Method according to one of claims 1 to 5, **characterized in that** process step b) is subdivided into the following process steps:
b1) Placing the negative form (27) in an upwardly open wrapping device (21),
b2) covering the wrapping device (21) with the flexible film (36), and
b3) generating a negative pressure in an area between the flexible film (36) and the negative form (27), whereby the flexible film (36) adheres to the negative form (27) and wraps it.

7. Method according to claim 6, **characterized in that** after process step b3) a belt (38) or the like is clamped tightly around the flexible film (36) and around the negative form (27).

8. Method according to claim 6 or 7, **characterized in that**, after process step b2), an overpressure is generated in the region between the flexible film (36) and the negative form (27), so that the flexible film (36) bulges away from the negative form (27), and **in that** subsequently the negative form (27) is brought closer to the flexible film (36), in particular brought into contact with the flexible film (36).

9. Method according to one of claims 1 to 8, **characterized in that** the at least one bonding bridge is a granular bonding bridge.

10. Method according to one of claims 1 to 9, **characterized in that** the at least one bonding bridge is a bonding bridge (13) with a geometrically defined shape.

11. Method according to one of claims 1 to 10, **characterized in that** the base body (2) of the manhole base liner (1) is manufactured in one piece from a flexibly and elastically deformable material with a wall thickness, with which it can be bent together elastically at least in partial areas essentially as desired.

12. Method according to claim 11, **characterized in that** a channel (4), which is lowered from the tread surface (3) and to which at least one pipe connection opening (5) is connected, is produced on the tread surface (3).

13. Method according to claim 11 or 12, **characterized in that** a substantially vertically projecting connecting edge (6) adapted to an outer shape of the tread surface (3) is arranged on the tread surface (3).

14. Method according to claim 13, **characterized in that** a transition strip (8) is arranged along an inner edge (7) of the connecting edge (6).

15. Method according to one of claims 10 to 14, **characterized in that** a pipe socket (9) is arranged in the pipe connection opening (5) or in a tubular connection piece (11) formed on the pipe connection opening (5) and is connected to a textile-coated, thermoplastic transition strip (8) arranged in the pipe connection opening (5) or in the connection piece (11).

## Revendications

1. Procédé pour la fabrication d'un revêtement de fond de puits (1) pour un puits de canalisation d'eaux usées, avec un corps de base (2) qui présente de préférence une surface praticable (3) et au moins une ouverture de raccordement de tuyau (5), comprenant les étapes de procédé suivantes :
a) production d'une forme négative (27) de revêtement de fond de puits (1),
b) enrobage au moins par zones de la forme négative (27) avec un film flexible (36) et
c) création du corps de base (2) par mise en forme d'un polymère à l'état liquide ou pâteux sur la surface de la forme négative (27) enveloppée du film flexible (36),
**caractérisé en ce que** le film se compose d'une matière plastique déformable de façon très élastique et **en ce que**, pendant l'étape c) du procédé, au moins un pont d'adhérence est relié au corps de base (2).

2. Procédé pour la fabrication d'un revêtement de fond de puits (1) pour un puits de canalisation d'eaux usées, avec un corps de base (2) qui comporte de préférence une surface de praticable (3) et au moins une ouverture de raccordement de tuyau (5), comprenant les étapes de procédé suivantes :
a) production d'une forme négative (27) de revêtement de fond de puits (1),
b) enrobage au moins par zones de la forme négative (27) avec un film flexible (36) et
c) création du corps de base (2) par mise en forme d'un polymère à l'état liquide ou pâteux sur la surface de la forme négative (27) enveloppée du film flexible (36),
**caractérisé en ce que** le film se compose d'une matière plastique déformable de façon très élastique et **en ce que**, après l'étape c) du procédé, au moins un pont d'adhérence est relié au corps de base (2).

3. Procédé selon la revendication 1 ou 2, **caractérisé en ce que** le film se compose de silicone.

4. Procédé selon l'une des revendications 1 à 3, **caractérisé en ce que** le polymère mis en forme est appliqué par pulvérisation, coulé, appliqué au pinceau, stratifié ou appliqué à la spatule.

5. Procédé selon la revendication 1, **caractérisé en ce que**, après l'étape c) du procédé, quand le matériau formant le corps de base (2) est au moins en partie solidifié, davantage de matériau durcissable est appliqué sur le matériau formant le corps de base (2).

6. Procédé selon l'une des revendications 1 à 5, **caractérisé en ce que** l'étape b) du procédé est divisée dans les étapes de procédé suivantes :
b1) placement de la forme négative (27) dans un dispositif d'enrobage (21) ouvert dessus,
b2) couverture du dispositif d'enrobage (21) avec le film flexible (36) et
b3) création d'une dépression dans une zone comprise entre le film flexible (36) et la forme négative (27), de sorte que le film flexible (36) se plaque sur la forme négative (27) et l'enveloppe.

7. Procédé selon la revendication 6, **caractérisé en ce que**, après l'étape b3) du procédé, une sangle (38) ou similaire est serrée étroitement autour du film flexible (36) et autour de la forme négative (27).

8. Procédé selon la revendication 6 ou 7, **caractérisé en ce que**, après l'étape b2) du procédé, une surpression est créée dans la zone comprise entre le film flexible (36) et la forme négative (27), de sorte que le film flexible (36) se voûter et s'écarte de la forme négative (27), et **en ce que** la forme négative (27) est ensuite rapprochée du film flexible (36), en particulier mise en contact avec le film flexible (36).

9. Procédé selon l'une des revendications 1 à 8, **caractérisé en ce que** l'au moins un pont d'adhérence est un pont d'adhérence sous forme de granulés.

10. Procédé selon l'une des revendications 1 à 9, **caractérisé en ce que** l'au moins un pont d'adhérence est un pont d'adhérence (13) qui a une forme géométrique définie.

11. Procédé selon l'une des revendications 1 à 10, **caractérisé en ce que** le corps de base (2) de revêtement de fond de puits (1) est fabriqué d'une pièce à partir d'un matériau flexible et déformable de façon élastique, ayant une épaisseur de paroi avec laquelle il peut être replié sensiblement à volonté de façon élastique au moins dans des zones partielles.

12. Procédé selon la revendication 11, **caractérisé en ce qu'**une rigole (4) renfoncée par rapport à la surface praticable (3), à laquelle se raccorde l'au moins une ouverture de raccordement de tuyau (5), est fabriquée sur la surface de praticable (3).

13. Procédé selon la revendication 11 ou 12, **caractérisé en ce qu'**un bord de raccordement (6) dépassant de façon sensiblement verticale et adapté à une forme extérieure de la surface praticable (3) est disposé sur la surface praticable (3).

14. Procédé selon la revendication 13, **caractérisé en ce qu'**une bande de transition (8) est disposée le long d'un côté de bord intérieur (7) du bord de raccordement (6).

15. Procédé selon l'une des revendications 10 à 14, **caractérisé en ce qu'**un piquage de tuyau (9) est disposé dans l'ouverture de raccordement de tuyau (5) ou dans une pièce de raccord tubulaire (11) formée sur l'ouverture de raccordement de tuyau (5) et relié à une bande de transition (8) thermoplastique, revêtue de textile et disposée dans l'ouverture de raccordement de tuyau (5) ou la pièce de raccord (11).
